# EUROPEAN PATENT SPECIFICATION

(11) **EP 4 192 225 B1**
(45) Date of publication and mention of the grant of the patent: **21.01.2026**
(21) Application number: 21743297.0
(22) Date of filing: 09.07.2021
(51) Int. Cl.: A01G 3/08, B23D 61/02, B27B 33/08

(54) **CLEARING SAW BLADE WITH INDEXING INDICIUM**
SÄBELSÄGEBLATT MIT INDEXIERUNGSANZEIGE
LAME DE DÉBROUSSAILLEUSE À INDICE D'INDEX

(30) Priority: 05.08.2020 SE 2050935
(43) Date of publication of application: 14.06.2023
(73) Proprietor: Husqvarna AB, 561 82 Huskvarna (SE)
(72) Inventor: LIKIDOU, Panagiota, 561 44 Huskvarna (SE); HAGBERG, Albin, 553 14 Jönköping (SE); MELIN, Patrik, 561 48 Huskvarna (SE)
(86) International application number: PCT/SE2021/050707
(87) International publication number: WO 2022/031202

(56) References cited:
- EP-A2- 1 849 546
- DE-A1- 2 531 409
- US-A- 3 537 491
- US-A1- 2004 149 114

## Description

### TECHNICAL FIELD

The disclosure generally relates to power equipment cutting blades and, more particularly, relates to such a cutting blade such as a clearing saw blade, which has indexing indicium provided on the blade.

### BACKGROUND

Power equipment for cutting vegetation, such as trimmers, edgers, clearing saws, chainsaws, and/or the like, is often used to perform tasks relating to yard/grounds maintenance or even commercial resource harvesting activities. Although this power equipment can have numerous different types of cutting devices, a rotating blade is one popular means by which to perform the cutting function. The blades are typically replaceable. However, with proper maintenance and sharpening of the blade, its useful life can be extended and the overall cost of operating the equipment can therefore be reduced. Moreover, the effectiveness of the blade (and therefore the corresponding cutting tool) can also be increased so that user satisfaction remains high.

Currently, clearing saw blades are manually filed and set (e.g., bent into proper position) frequently. For example, although setting may occur less frequently in some cases, the clearing saw blade may be filed every time the user stops for refueling or other breaks. For a full-time user, this can translate into at least several filing operations per day. Since the blades are typically rotationally symmetrical, the user often has trouble identifying where he or she began the filing/setting operation. This could lead to uneven filing/setting if the entire blade is not treated, or could waste time with duplicated efforts being expended on some of the teeth of the blade. This can lead to user frustration due to unnecessary filing, setting and/or measuring. In many cases, the user will deal with this problem by carrying a paint marker, or some other marking device in order to mark the starting point of the filing/setting operation. Of course, these marks are often erased through normal operation of the blade thereafter, so the marking operation will normally have to also be repeated each and every time the user engages in a filing/setting operation.

### SUMMARY

An aspect of the disclosure enable a user to quickly identify a position on the blade at which to start and end filing/setting by placing a durable or permanent indexing indicia on the blade.

A rotary cutting blade for a hand-held power tool is provided. The blade includes a base portion defining a planar disc, and a plurality of teeth disposed equidistant from each other and extending outwardly from a periphery of the base portion . Each of the teeth has a leading edge and a trailing edge. The blade also includes a gullet disposed between each adjacent one of the teeth and an indexing indicium formed at a marked tooth from among the teeth. The indexing indicium may be formed on the blade proximate to or on the marked tooth.

The indexing indicium may be formed by addition or removal of material at the outer contour of the blade.

The indexing indicium may be positioned in a range between the trailing half of the trailing edge and the leading half of the gullet.

One and only one indexing indicia is formed in the blade.

DE 25314009 A1 discloses a saw blade provided with filing marks to help keeping the correct form of the teeth when filing the saw blade.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a block diagram of a power equipment device capable of employing a blade with indexing indicia in accordance with an example embodiment;
FIG. 2 illustrates a top view of a blade having indexing indicia in accordance with an example embodiment;
FIG. 3, which is defined by FIGS. 3A and 3B, illustrates one example of indexing indicia in accordance with an example embodiment;
FIG. 4, which is defined by FIGS. 4A and 4B, illustrates another example of indexing indicia in accordance with an example embodiment; and
FIG. 5 illustrates a block diagram of a non-claimed method for providing indexing indiciumo on a blade in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

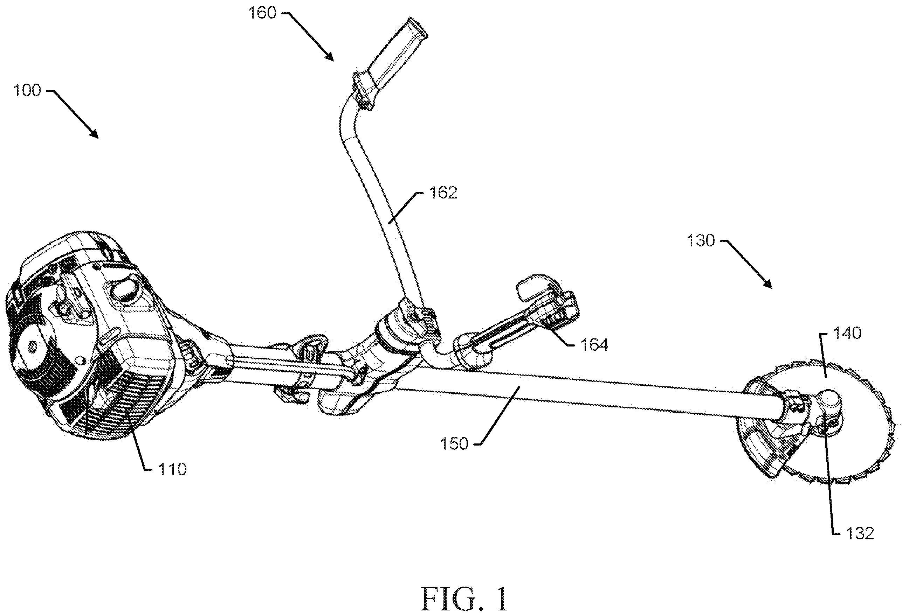

FIG. 1 illustrates a block diagram of a hand-held power tool 100 (e.g., a clearing saw) according to an example embodiment. As shown in FIG. 1, the tool 100 may include a power source 110, which could be either electric or gasoline powered. Thus, for example, the power source 110 may include a battery or electrical cord that powers an electric motor. However, in the example of FIG. 1, the power source 110 happens to be a gasoline or petrol engine.

The power source 110 may provide torque or generate rotational force to operate a working assembly 130 to perform a functional task. In some cases, the working assembly 130 may include a cutting head 132, which drives a cutting blade 140 of an example embodiment. The working assembly 130 may be operably coupled to the power source 110 via a shaft 150. The shaft 150 may physically support both the working assembly 130 and the power source 110 and may provide structures by which mechanical and/or electrical connections are made between the power source 110 and the working assembly.

A control assembly 160 may be positioned at a portion of the shaft 150 to facilitate control of the tool 100. The control assembly 160 may include a handlebar assembly 162 or any other suitable means by which to physically direct the working assembly 130. In some cases, the control assembly 160 may also include operational controls 164 such as on/off switches, triggers, speed controllers and/or the like, which may be configured to provide the means for control of the direction and speed of operation of the working assembly 130.

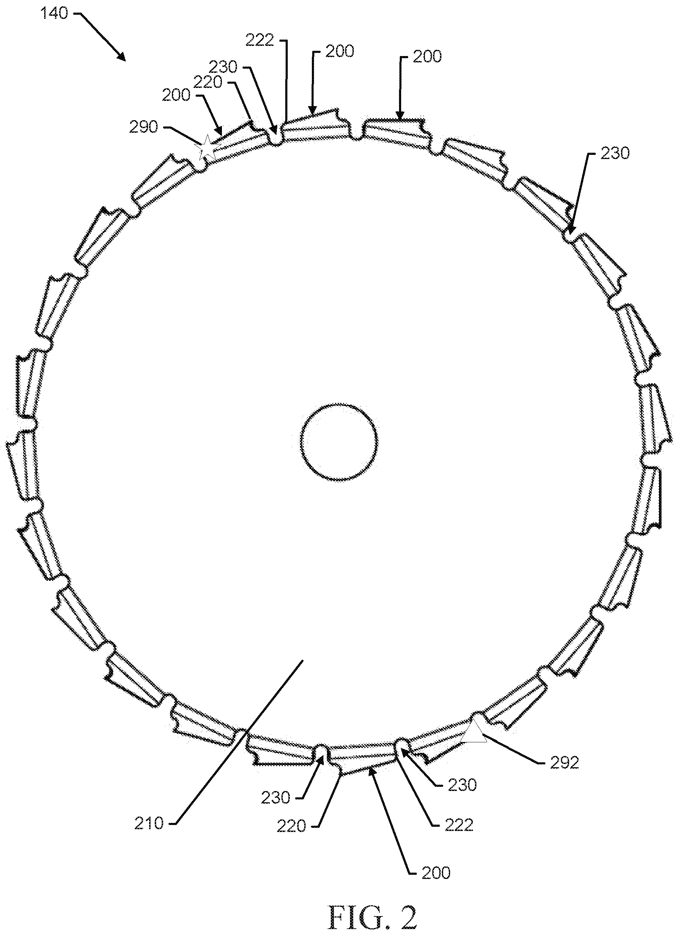

The cutting blade 140 may be rotated at relatively high speed to cut vegetation. As shown in FIG. 2, the cutting blade 140 may include a plurality of teeth 200 disposed around a periphery of the cutting blade 140 to facilitate such cutting. The teeth 200 may have extend away from a base portion 210 of the blade 140. The base portion 210 may be a substantially flat plate having a round shape. As such, the base portion 210 may lie entirely in a plane and define a planar surface on each opposing side thereof. In other words, the base portion 210 may define a planar disc and the plane in which the planar disc lies may extend substantially perpendicular to an axis about which the cutting blade 140 is rotated during normal operation.

Each one of the teeth 200 includes a leading edge 220 (or leading end) and a trailing edge 222 (or trailing end), and are separated from each other by gullets 230 disposed between respective ones of the teeth 200. More particularly, the gullets 230 separate the leading edge 220 of one of the teeth 200 from the trailing edge 222 of an adjacent one of the teeth 200. In a typical situation, it is desirable to keep the teeth 200 and the gullets 230 fairly uniform in size, shape and distribution about the periphery of the blade 140. That said, in some cases, the teeth 200 may be slightly bent out of the plane in which the base portion 210 lies in order to facilitate effective cutting. In an example embodiment, adjacent ones of the teeth 200 may be bent out of the plane of the base portion 210 in opposite directions to facilitate balance for the blade 140 during high speed rotation thereof, and to cut a kerf that is wider than the base portion 210 of the blade 140 to avoid friction between the kerf and the base portion 210.

As discussed above, users of the tool 100 may routinely perform maintenance on the blade 140 in order to extend the useful life of the blade 140 and improve its cutting efficiency. Such maintenance may include filing, which includes running a file (typically at a specified angle) over a portion of the leading edge 220 of each one of the teeth 200. The maintenance may also or alternatively include setting, which involves bending the teeth 200 to a specified angle relative to the plane of the base portion 210. Filing and setting (whether performed in combination or independently) are only desirable to perform once for each individual tooth among the teeth 200. In this regard, not only does duplicating the effort of filing and/or setting for any individual tooth waste time, but it can also lead to uneven filing of some of the teeth 200 over time. The unevenness can both shorten the life of the blade 140, and also result in uneven weight distributions for the blade 140. The unevenness may also or alternatively cause decreased cutting performance/efficiency and/or make the tool 100 harder to control (e.g., due to kickback or other reaction forces from cutting). Accordingly, it is important to know where filing and/or setting operations are begun, so the operator can also know where to stop to avoid duplicated efforts.

Because the blade 140 and the teeth 200 routinely engage vegetation and objects of varying hardness at high speed during operation, it can be appreciated that paint, ink, or other such markers are likely to be worn away with use. Thus, paint, ink or other such markings are unreliable, and very likely to only be temporary, if used as indexing indicia to show where a filing and/or setting operation is begun. Accordingly, it may be desirable to provide a permanent indexing indicia on the blade 140. In this regard, for example, some embodiments may provide permanently marked indexing indicia on the blade during manufacture. Not only would permanent marking save the extra step of having to mark the starting point each time maintenance is performed, but it also eliminates the need to carry the extra component (i.e., the marking device) in order to enable temporary marking. Permanently marked indexing indicia may therefore allow the operator to have a visible index to refer to for filing and/or setting the teeth 200 that will not go away or be diminished with usage of the blade 140, and that saves both time and complexity associated with maintenance of the blade 140.

In FIG. 2, a star shape is provided on the blade 140 to demonstrate a permanently marked indexing indicia 290 in accordance with an example embodiment. However, it should be appreciated that the indexing indicia 290 of example embodiments may be accomplished via any of a number of different strategies or methods. Several of these strategies or methods will be described hereinafter. Some such strategies or methods may include the addition or removal of some amount of material of the blade 140 (e.g., at one of the teeth 200 or one gullet 230). The addition or removal of material in some cases may be made small enough (e.g., relative to the overall size and weight of the blade 140) to avoid any significant impacts on balance for the blade 140. However, in other cases, in order to provide additional assurance that any modification associated with providing the indexing indicium 290, a compensatory adjustment 292 may be placed on a side of the blade 140 opposite the indexing indicium290 to preserve static balance of the blade 140. If the indexing indicium290 involves adding material, the compensatory adjustment 292 may add a substantially equal amount of material to the opposite side of the blade 140. Likewise, if the indexing indicium290 involves removing material from the blade 140, the compensatory adjustment 292 may add a substantially equal amount of material to the opposite side of the blade 140. However, while the indexing indicium290 may be made to be prominent (i.e., for easy identification), the compensatory adjustment 292 may be made to be subtle and not prominent, so that it is not noticed or at least is not mistaken for the indexing indicium290. As illustrated, the indexing indicium290 may be formed by addition or removal of material at the outer contour of the blade. The indexing indicium290 may be positioned in a range between the trailing half of the trailing edge 222 and the leading half of the gullet 230 where it does disturb the blade's cutting operation to a negligible or at least much lesser extent. One and only one indexing indicium290 is formed in the blade.

As noted above, the indexing indicium290 can be accomplished numerous ways. For example, the indexing indicium290 may be formed by geometrical indexing. Geometrical indexing may refer to the modification of the geometry of the blade 140 itself. As such, geometrical indexing may be performed by either adding material to or removing material from one of the teeth 200 of the blade 140. In other cases, chromatic differences in materials may be used to provide the indexing indicium290. In such an example, the tooth on which the indexing indicium290 is formed may have a substrate that is a material having a different color than all other teeth 200. Alternatively or additionally, the chromatic difference may be provided by adding a coating (e.g., TiN, powder coating, oxide layer, etc.) to the tooth on which the indexing indicium290 is formed that has a different color than every other one of the teeth 200 (or any coatings thereon). As yet another example, the indexing indicia may be formed by laser marking, etching, engraving or stamping the indexing feature on the blade 140.

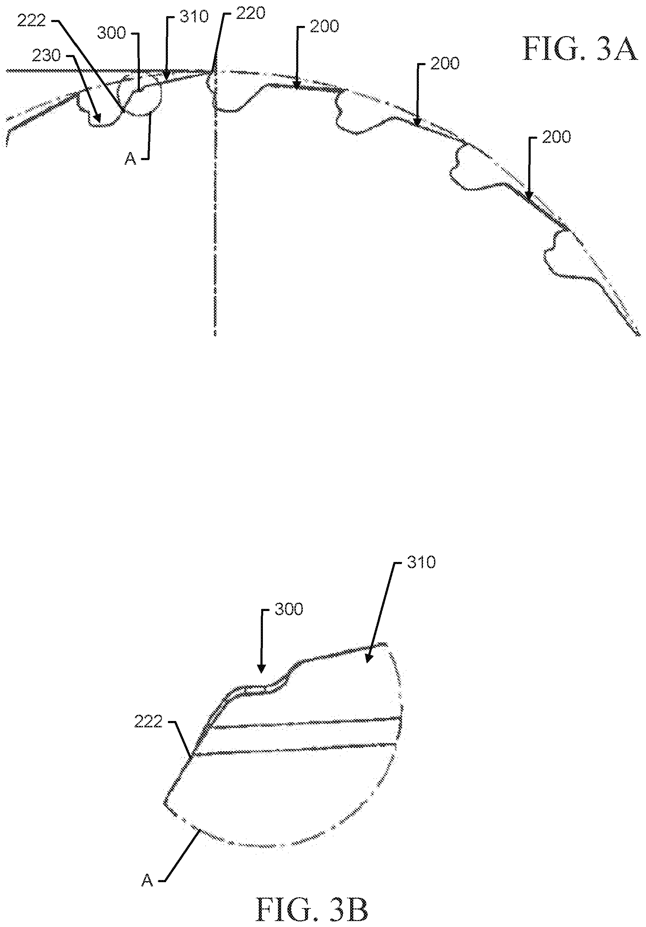

FIG. 3, which is defined by FIGS. 3A and 3B, illustrates one example in which material is removed from one of the teeth 200 to form a notch 300 (which is one example of the indexing indicia 290 of FIG. 2). A highlighted section A of FIG. 3A is shown in greater detail in FIG. 3B. Referring to FIGS. 3A and 3B, the tooth on which the notch 300 is formed may be referred to as a marked tooth 310. The marked tooth 310 is therefore distinct from all of the other teeth 200, and can serve as a reference point for beginning the filing/setting operation associated with maintaining the blade 140.

The notch 300 of this example is formed by removal of material from a portion of the marked tooth 310 that is proximate to the trailing edge 222. While the notch 300 could alternatively be placed in other locations (e.g., the leading edge 220 or the gullet 230), placing the notch 300 at the trailing edge 222 may be preferred in some cases since the trailing edge 222 of the marked tooth 310 experiences less stress during cutting than the leading edge 220.

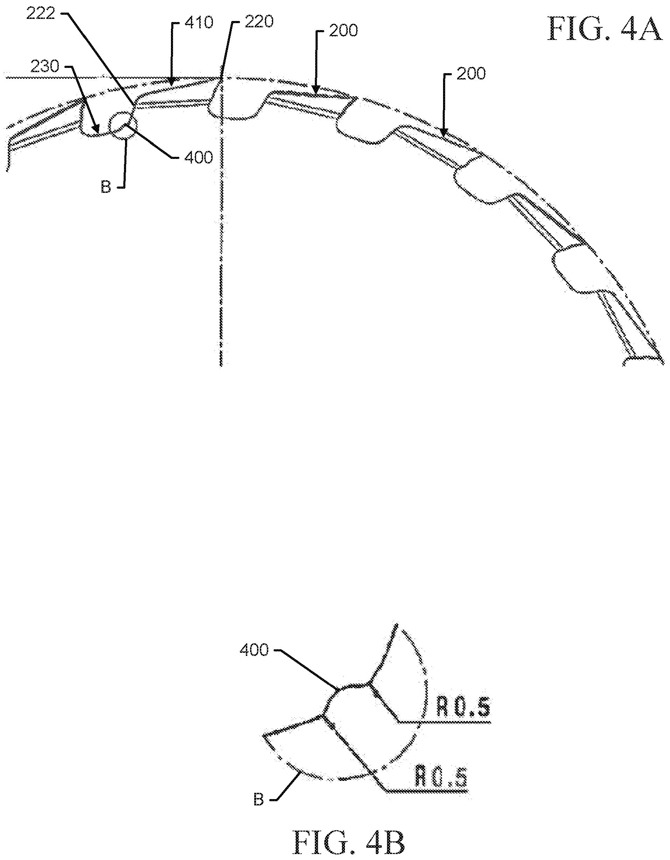

FIG. 4, which is defined by FIGS. 4A and 4B, illustrates one example in which material is added to form the indexing indicium290. A highlighted section B of FIG. 4A is shown in greater detail in FIG. 4B. Referring to FIGS. 4A and 4B, material is added in a portion of the gullet 230 of one of the teeth 200 to form a projection 400 (which is one example of the indexing indicia 290 of FIG. 2). The projection 400 of this example has a radius of about 0.5 mm, but other sizes could be chosen depending on the overall size of the blade 140. The tooth on which the projection 400 is formed may be referred to as a marked tooth 410. The marked tooth 410 is therefore distinct from all of the other teeth 200, and can serve as a reference point for beginning the filing/setting operation associated with maintaining the blade 140.

The projection 400 of this example is formed by providing a small additional amount of material at a portion of the gullet 230 of the marked tooth 410 that is proximate to the trailing edge 222. While the projection 400 could alternatively be placed in other locations (e.g., on either end of the marked tooth 410 itself or at a part of the gullet 230 that is nearer the leading edge 220 of the adjacent tooth instead of near the trailing edge 222 of the marked tooth 410), placing the projection 400 in the gullet 230 near the trailing edge 222 may be preferred in some cases since the trailing edge 222 of the marked tooth 410 experiences less stress during cutting than the leading edge 220. Moreover, the additional material being placed at this location provides less exposure of the additional material to materials being cut, and therefore minimizes any potential wear on the projection 400.

In some cases, the location of the notch 300 in FIG 3 may instead (or additionally) be the location of a laser marking, etching, engraving, etc., acting as the indexing indicia 290. Similarly, the location of the projection 400 in FIG 4 may instead (or additionally) be the location of a laser marking, etching, engraving, etc., acting as the indexing indicia 290. Additionally or alternatively, the notch 300 and/or the projection 400 may be replaced by or accompanied with chromatic differentiation as described above, e.g., via a substrate or coating of a different color.

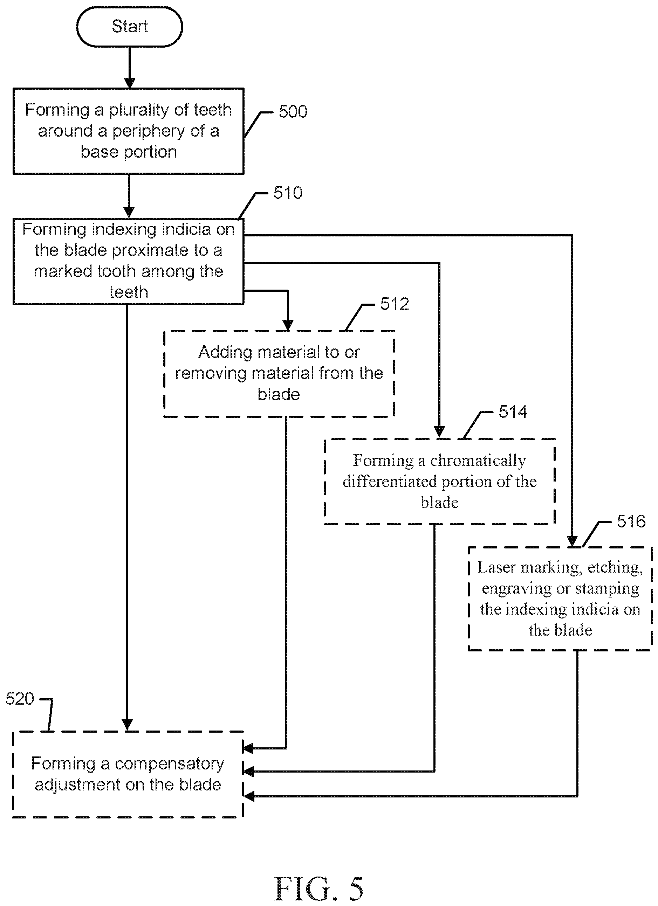

FIG. 5 illustrates a block diagram of a method for providing durable or permanent indexing indicia on a blade in accordance with a non-claimed example embodiment. The method may include forming a plurality of teeth around a periphery of a base portion of the blade at operation 500, and forming the indexing indicia on the blade proximate to a marked tooth among the teeth at operation 510.

In some non-claimed embodiments, the method include a number of modifications, augmentations, or optional additions, some of which are described herein (and shown in dashed lines in FIG. 5). The modifications, augmentations or optional additions listed below may be added in any desirable combination. In this regard, for example, forming the indexing indicium 290 may include adding material to the blade 140 or removing material from the blade 140 at operation 512. In some cases, adding material to the blade may include forming the projection 400 extending from a portion of the blade 140 proximate to the trailing edge 222 of the blade 140 and removing material from the blade 140 comprises forming a groove 300 proximate to the trailing edge of the blade 140. In some cases, forming the indexing indicium290 may include forming a chromatically differentiated portion of the blade at operation 512. The chromatically differentiated portion of the blade 140 may include a portion of the blade 140 having a material or coating of a different color than a material forming a substrate of the blade 140. In some cases, forming the indexing indicium290 may include laser marking, etching, engraving or stamping the indexing indicia on the blade 140 at operation 516. In some cases, the method may include an additional operation of forming the compensatory adjustment 292 disposed on an opposite side of the blade 140 from the indexing indicium290 at operation 520. In an example embodiment, forming the compensatory adjustment 292 may include removing or adding an equal amount of material as that removed or added to form the indexing indicium290. The indexing indicia 290 is then typically narrower than the compensatory adjustment 292, such that the latter is less visible.

In accordance with an example embodiment, a rotary cutting blade for a hand-held power tool may be provided. The blade may include a base portion defining a planar disc, and a plurality of teeth disposed equidistant from each other and extending outwardly from a periphery of the base portion . Each of the teeth may have a leading edge and a trailing edge. The blade may also include a gullet disposed between each adjacent one of the teeth and an indexing indicia formed at a marked tooth from among the teeth. The indexing indicia may be formed on the blade proximate to or on the marked tooth.

The blade may include a number of modifications, augmentations, or optional additions, some of which are described herein. The modifications, augmentations or optional additions listed below may be added in any desirable combination. Within this context, the blade described above may be considered a first embodiment, and other embodiments may be defined by each respective combination of modifications, augmentations or optional additions. Thus, for example, the indexing indicia may include an addition of material to the blade. Such addition of material may include forming the indexing indicia as a projection extending from a portion of the blade. The projection may be formed in the gullet proximate to the trailing edge of the marked tooth. In an example embodiment, the indexing indicia may include a removal of material to the blade. Thus, for example, the indexing indicia may include a groove formed in a portion of the blade. The groove may be formed at the trailing edge of the marked tooth. In some cases, the indexing indicia may include a chromatically differentiated portion of the blade. The chromatically differentiated portion of the blade may include a portion of the blade having a material of a different color than a material forming a substrate of the blade. For example, the chromatically differentiated portion of the blade may include a portion of the blade having a coating of a different color than material forming remaining portions of the blade. In an example embodiment, the indexing indicia may be formed by laser marking, etching, engraving or stamping the indexing indicia on the blade. In some cases, the blade may further include a compensatory adjustment disposed on an opposite side of the blade from the indexing indicia. The compensatory adjustment may include a removal or addition of an equal amount of material as that removed or added to form the indexing indicia.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims.

## Claims

1. A rotary cutting blade (140) for a hand held power tool (100), the blade (140) comprising:
a base portion (210) defining a planar disc;
a plurality of teeth (200) disposed equidistant from each other and extending outwardly from a periphery of the base portion (210), each of the teeth (200) having a leading edge (220) and a trailing edge (222);
a gullet (230) disposed between each adjacent one of the teeth (200); and
**characterized in** the cutting blade (140) comprising
one and only one indexing indicium (290) formed at a marked tooth (310, 410) among the teeth (200),
wherein the indexing indicium (290) is formed on the blade proximate to or on the marked tooth (310, 410).

2. The blade (140) of claim 1, wherein the indexing indicium (290) is formed by addition or removal of material at the outer contour of the blade (140).

3. The blade (140) of claim 1 or 2, wherein the indexing indicium (290) is positioned in a range between the trailing half of the trailing edge (222) and the leading half of the gullet (230).

4. The blade (140) of any of claims 1-3, wherein the indexing indicium (290) comprises an addition of material to the blade (140).

5. The blade (140) of claim 4, wherein the indexing indicium (290) comprises a projection (400) extending from a portion of the blade (140).

6. The blade (140) of claim 5, wherein the projection (400) is formed in the gullet (230) proximate to the trailing edge (222) of the marked tooth (310, 410).

7. The blade (140) of any of claims 1-3, wherein the indexing indicium (290) comprises a removal of material to the blade (140).

8. The blade (140) of claim 7, wherein the indexing indicia (290) comprises a groove (300) formed in a portion of the blade (140), preferably at the trailing edge (222) of the marked tooth (310, 410).

9. The blade (140) of any of claims 1-3, wherein the indexing indicia (290) comprises a chromatically differentiated portion of the blade (140).

10. The blade (140) of claim 9, wherein the chromatically differentiated portion of the blade (140) comprises a portion of the blade (140) having a material of a different color than a material forming a substrate of the blade (140).

11. The blade (140) of claim 9, wherein the chromatically differentiated portion of the blade (140) comprises a portion of the blade (140) having a coating of a different color than material forming remaining portions of the blade (140).

12. The blade (140) of any of claims 1-3, wherein the indexing indicia (290) is formed by laser marking, etching, engraving or stamping the indexing indicia (290) on the blade (140).

13. The blade (140) of any of claims 1-12, further comprising a compensatory adjustment (292) disposed on an opposite side of the blade (140) from the indexing indicium (290).

14. The blade (140) of claim 13, wherein the compensatory adjustment (292) comprises a removal or addition of an equal amount of material as that removed or added to form the indexing indicium (290).

15. The blade (140) of claim 14, wherein the indexing indicium (290) is narrower than the compensatory adjustment (292).

## Patentansprüche

1. Rotierendes Schneidblatt (140) für ein handgehaltenes Elektrowerkzeug (100), wobei das Blatt (140) Folgendes umfasst:
einen Basisteil (210), der eine planare Scheibe definiert;
mehrere Zähne (200), die äquidistant voneinander angeordnet sind und sich von einem Umfang des Basisabschnitts (210) nach außen erstrecken, wobei jeder der Zähne (200) eine Vorderkante (220) und eine Hinterkante (222) aufweist;
eine Zahnkehle (230), die jeweils zwischen angrenzenden Zähnen (200) angeordnet ist; und
**dadurch gekennzeichnet, dass** das Schneidblatt (140) Folgendes umfasst:
ein und nur ein Indexierungszeichen (290), die an einem markierten Zahn (310, 410) unter den Zähnen (200) gebildet ist,
wobei das Indexierungszeichen (290) an dem Blatt nahe dem oder an dem markierten Zahn (310, 410) gebildet ist.

2. Blatt (140) nach Anspruch 1, wobei das Indexierungszeichen (290) durch Hinzufügen oder Entfernen von Material an der Außenkontur des Blattes (140) gebildet ist.

3. Blatt (140) nach Anspruch 1 oder 2, wobei das Indexierungszeichen (290) in einem Bereich zwischen der hinteren Hälfte der Hinterkante (222) und der vorderen Hälfte der Zahnkehle (230) positioniert ist.

4. Blatt (140) nach einem der Ansprüche 1-3, wobei das Indexierungszeichen (290) eine Materialzugabe zum Blatt (140) umfasst.

5. Blatt (140) nach Anspruch 4, wobei das Indexierungszeichen (290) einen Vorsprung (400) umfasst, der sich von einem Abschnitt des Blattes (140) erstreckt.

6. Blatt (140) nach Anspruch 5, wobei der Vorsprung (400) in der Zahnkehle (230) nahe der Hinterkante (222) des markierten Zahns (310, 410) gebildet ist.

7. Blatt (140) nach einem der Ansprüche 1-3, wobei das Indexierungszeichen (290) ein Entfernen von Material am Blatt (140) umfasst.

8. Blatt (140) nach Anspruch 7, wobei das Indexierungszeichen (290) eine Kerbe (300) umfassen, die in einem Abschnitt des Blattes (140), vorzugsweise an der Hinterkante (222) des markierten Zahns (310, 410), ausgebildet ist.

9. Blatt (140) nach einem der Ansprüche 1-3, wobei das Indexierungszeichen (290) einen chromatisch differenzierten Abschnitt des Blattes (140) umfassen.

10. Blatt (140) nach Anspruch 9, wobei der chromatisch differenzierte Abschnitt des Blattes (140) einen Abschnitt des Blattes (140) umfasst, der ein Material mit einer anderen Farbe als ein Material aufweist, das ein Substrat des Blattes (140) bildet.

11. Blatt (140) nach Anspruch 9, wobei der chromatisch differenzierte Abschnitt des Blattes (140) einen Abschnitt des Blattes (140) umfasst, der eine Beschichtung mit einer anderen Farbe als das Material aufweist, das verbleibende Abschnitte des Blattes (140) bildet.

12. Blatt (140) nach einem der Ansprüche 1-3, wobei das Indexierungszeichen (290) durch Lasermarkierung, Ätzen, Gravieren oder Prägen des Indexierungszeichens (290) auf dem Blatt (140) gebildet sind.

13. Blatt (140) nach einem der Ansprüche 1-12, ferner umfassend eine Ausgleichseinstellung (292), die auf einer gegenüberliegenden Seite des Blattes (140) von dem Indexierungszeichen (290) angeordnet ist.

14. Blatt (140) nach Anspruch 13, wobei die Ausgleichseinstellung (292) ein Entfernen oder Hinzufügen einer gleichen Menge an Material umfasst wie das, das entfernt oder hinzugefügt wurde, um das Indexierungszeichen (290) zu bilden.

15. Blatt (140) nach Anspruch 14, wobei das Indexierungszeichen (290) schmaler als die Ausgleichseinstellung (292) ist.

## Revendications

1. Lame de coupe rotative (140) pour outil électrique à main (100), la lame (140) comportant :
une portion de base (210) définissant un disque plan ;
une pluralité de dents (200) disposées à équidistance les unes des autres et s'étendant vers l'extérieur à partir d'une périphérie de la portion de base (210), chacune des dents (200) ayant un bord avant (220) et un bord arrière (222) ;
une gorge (230) disposée entre chaque dent adjacente (200) ; et
**caractérisée en ce que** la lame de coupe (140) comprend un et un seul repère (290) formé au niveau d'une dent marquée (310, 410) parmi les dents (200),
le repère (290) étant formé sur la lame à proximité de la dent marquée (310, 410) ou sur celle-ci.

2. Lame (140) selon la revendication 1, dans laquelle le repère (290) est formé par ajout ou enlèvement de matière au niveau du contour extérieur de la lame (140).

3. Lame (140) selon la revendication 1 ou 2, dans laquelle le repère (290) est positionné dans une plage comprise entre la moitié arrière du bord arrière (222) et la moitié avant de la gorge (230).

4. Lame (140) selon l'une quelconque des revendications 1 à 3, dans laquelle le repère (290) comprend un ajout de matière au niveau de la lame (140).

5. Lame (140) selon la revendication 4, dans laquelle le repère (290) comprend une saillie (400) s'étendant à partir d'une partie de la lame (140).

6. Lame (140) selon la revendication 5, dans laquelle la saillie (400) est formée dans la gorge (230) à proximité du bord arrière (222) de la dent marquée (310, 410).

7. Lame (140) selon l'une quelconque des revendications 1 à 3, dans laquelle le repère (290) comprend un enlèvement de matière au niveau de la lame (140).

8. Lame (140) selon la revendication 7, dans laquelle les repères (290) comprennent une rainure (300) formée dans une partie de la lame (140), de préférence au niveau du bord arrière (222) de la dent marquée (310, 410).

9. Lame (140) selon l'une quelconque des revendications 1 à 3, dans laquelle les repères (290) comprennent une partie différenciée chromatiquement de la lame (140).

10. Lame (140) selon la revendication 9, dans laquelle la partie différenciée chromatiquement de la lame (140) comprend une partie de la lame (140) ayant un matériau d'une couleur différente de celle d'un matériau formant un substrat de la lame (140).

11. Lame (140) selon la revendication 9, dans laquelle la partie différenciée chromatiquement de la lame (140) comprend une partie de la lame (140) ayant un revêtement d'une couleur différente de celle d'un matériau formant les parties restantes de la lame (140).

12. Lame (140) selon l'une quelconque des revendications 1 à 3, dans laquelle les repères (290) sont formés en appliquant les repères (290) par marquage au laser, attaque, gravure ou estampage sur la lame (140).

13. Lame (140) selon l'une quelconque des revendications 1 à 12, comprenant en outre un ajustement compensatoire (292) disposé sur un côté opposé de la lame (140) relativement au repère (290).

14. Lame (140) selon la revendication 13, dans laquelle l'ajustement compensatoire (292) comprend un enlèvement ou un ajout d'une quantité de matière égale à celle enlevée ou ajoutée pour former le repère (290).

15. Lame (140) selon la revendication 14, dans laquelle le repère (290) est plus étroit que l'ajustement compensatoire (292).
